# EUROPÄISCHE PATENTSCHRIFT

(11) **EP 2 644 987 B1**
(45) Veröffentlichungstag und Bekanntmachung des Hinweises auf die Patenterteilung: **17.10.2018**
(21) Anmeldenummer: 13161959.5
(22) Anmeldetag: 02.04.2013
(51) Int. Cl.: F21V 21/15

(54) **Beleuchtungsvorrichtung und Beleuchtungsverfahren**
Lighting device and lighting method
Dispositif d'éclairage et procédé d'éclairage

(30) Priorität: 30.03.2012 DE 102012205313
(43) Veröffentlichungstag der Anmeldung: 02.10.2013
(73) Patentinhaber: ART+COM AG, 10787 Berlin (DE)
(72) Erfinder: Sauter, Joachim, 10115 Berlin (DE); Siemssen, Klaus-Peter, 83339 Chieming (DE); Lüsebrink, Dirk, 10437 Berlin (DE)
(74) Vertreter: Maikowski & Ninnemann Patentanwälte Partnerschaft mbB

(56) Entgegenhaltungen:
- EP-A1- 1 978 293
- WO-A1-2007/036581
- WO-A1-2011/015971
- DE-A1- 10 045 028
- DE-U1- 29 504 472
- US-A1- 2002 149 927

## Beschreibung

Die Erfindung betrifft eine Beleuchtungsvorrichtung mit den Merkmalen des Anspruchs 1 und ein Beleuchtungsverfahren mit den Merkmalen des Anspruchs 14. Beleuchtungsvorrichtungen haben die Aufgabe, ein Objekt in einer definierten Weise auszuleuchten. Diese Vorgabe legt dem Gestalter von Beleuchtungsvorrichtungen bestimmte Rahmenbedingungen vor, so dass der Gestaltungsraum für den Gestalter der Beleuchtungsvorrichtung häufig nicht so groß ist, wie vom Gestalter gewünscht.
Die EP 1 978 293 A1 betrifft ein System zur dreidimensionalen Bühnendarstellung mit einer Vielzahl von Beleuchtungsvorrichtungen. Die Beleuchtungsvorrichtungen sind jeweils über ein Kabel an einem Rahmen aufgehängt und können in ihrer Höhe und Helligkeit individuell eingestellt werden.
Die WO 2011/015971 A1 beschreibt ein Beleuchtungssystem mit gleichzeitiger Einstellung von Intensität und Abstrahlwinkel. Das Beleuchtungssystem umfasst zumindest eine Beleuchtungseinheit mit mehreren Lichtquellen, deren abgegebene Lichtintensität und deren Abstrahlwinkel eingestellt werden können. Zwischen dem Abstrahlwinkel und der Lichtintensität besteht dabei eine vorbestimmte Beziehung.
Die DE 100 45 028 A1 betrifft eine Beleuchtungsanlage zum Simulieren der Bestrahlung eines Objekts durch das natürliche Sonnenlicht. Dabei werden mehrere Leuchten reihenweise zusammengefasst, wobei die Winkelstellung dieser Reihen bezüglich eines Grundrahmens verändert werden kann. Die Beleuchtungsintensität der Leuchten ist durch mechanisches Dimmen einstellbar.

Die US 2002/0149927 A1 beschreibt ein portables, anpassbares, modulares Beleuchtungssystem zur Beleuchtung von Fernseh-, Filmbühnen und Ähnlichem. Das System umfasst mehrere Leuchten an einem horizontalen Rahmen, der bezüglich einer Mehrzahl von vertikalen Elementen auf und ab bewegt werden kann. Die Leuchten, Einbauten und/oder der Rahmen sind computergesteuert. Dabei können der Betrieb, die Intensität, der Winkel, die Höhe und ähnliche Parameter des Systems vorprogrammiert sein.

Die DE 295 04 472 U1 beschreibt eine mittels Motoren bewegliche, gebündelt strahlende und in ihrer Intensität kabellos fernsteuerbare Lichtquelle, wobei eine selbsttätige Ausrichtung der gebündelten Lichtstrahlung in Richtung eines Fernsteuersenders stattfindet, indem ein Sensor die Strahlung eines Fernsteuersenders ortet und Lagekorrekturen mittels einer elektronischen Baugruppe an die Motoren weitergibt.

Die WO 2007/036581 A1 betrifft ein Beleuchtungssystem mit einer Vielzahl von Leuchtelementen, welche in Reihen und Spalten angeordnet sind. Mehrere Leuchtelemente werden gruppiert mittels eines elektronischen Steuersystems ausgerichtet. Dies dient insbesondere der Beleuchtung auf OP-Tischen.

Es besteht daher die Aufgabe, eine Beleuchtungsvorrichtung und ein Beleuchtungsverfahren zu schaffen, das dem Gestalter mehr Freiheit bei der Ausleuchtung von Objekten gibt.

Eine Beleuchtungsvorrichtung weist mindestens ein Beleuchtungsmittel auf, dessen räumliche Lage relativ zum Objekt zeitlich veränderlich ist und mindestens ein Beleuchtungsparameter für die Beleuchtung des Objekts in Abhängigkeit von der Lageänderung des Beleuchtungsmittels einstellbar ist. Somit können Beleuchtungsvorrichtungen geschaffen werden, bei denen mindestens ein Beleuchtungsmittel beweglich angeordnet ist. Dies schließt die Möglichkeit mit ein, dass mehrere Beleuchtungsmittel miteinander beweglich verbunden sind, so dass eine verformbare Beleuchtungsvorrichtung entstehen kann. Das Beleuchtungsergebnis ist über die Einstellbarkeit mindestens eines Beleuchtungsparameters für die Beleuchtung des Objekts einstellbar. Dabei ist die Beleuchtung des Objektes von einer Datenverarbeitungsvorrichtung so steuerbar, dass mindestens eine Beleuchtungseigenschaft des mindestens einen Beleuchtungsmittels einem vorgegebenen Programm folgt, nämlich im Wesentlichen konstant bleibt, auch wenn sich die räumliche Lage des mindestens einen Beleuchtungsmittels ändert. Dies kann sich z.B. darin ausdrücken, dass sich der Abstand zum Objekt und / oder die Orientierung zum Objekt ändert und / oder sich das mindestens eine Beleuchtungsmittel relativ zum Objekt bewegt. Dabei ist vorgesehen, dass während der Bewegung des Beleuchtungsmittels die Leuchtstärke jeweils angepasst wird, entweder kontinuierlich oder in diskreten Schritten, so dass bei einer Bewegung auf das Objekt der Lichtstrom verringert wird, bei einer Bewegung vom Objekt weg die Lichtstärke erhöht wird, sodass die Beleuchtungseigenschaft durch die bewegliche Funktion der Beleuchtungsvorrichtung nicht beeinträchtigt wird.

Als vorgegebenes Programm kann z.B. eine für einen Menschen konstant wahrgenommene Helligkeit verwendet werden. Dies schließt ein, dass z.B. nicht nur eine Lichtstärke konstant gehalten wird, sondern auch noch physiologische Wahrnehmungsparameter berücksichtigt werden. Im Wesentlichen konstant ist eine Beleuchtungseigenschaft, wenn sie von einem Menschen auf Grund seiner normalen Wahrnehmung als konstant empfunden wird. Somit umfasst der Begriff einer konstanten Beleuchtungseigenschaft nicht nur den physikalischen Begriff eines konstanten Wertes, sondern auch einen physiologischen.

Dabei ist es vorteilhaft, wenn die räumliche Lage des mindestens einen Beleuchtungsmittels relativ zum Objekt durch einen zeitlich variablen Abstand, dessen zeitlich variable Orientierung relativ zu dem Objekt und / oder dessen Bewegungsbahn relativ zum Objekt bestimmt ist. Aus diesen Bestimmungen können effizient Angaben zur Beeinflussung der Beleuchtungsparameter abgeleitet werden. Ferner ist es vorteilhaft, wenn die Lageänderung des mindestens einen Beleuchtungsmittels durch eine veränderte Lage, insbesondere die Differenz zwischen zwei Orten, durch die Geschwindigkeit der Lageänderung und / oder die Beschleunigung der Lageänderung bestimmt ist. Durch die bewegliche, d.h. zeitlich veränderbare Anordnung des mindestens einen Beleuchtungsmittels können komplexe Beleuchtungsvorrichtungen geschaffen werden.

Vorteilhafterweise ist das Objekt als Fläche, Körper und / oder als Raum, insbesondere als Innenraum in einem Haus ausgebildet. Das zu beleuchtende Objekt kann insbesondere auch aus einer Kombination einer Fläche, eines Körpers und eines Raumes bestehen, wie dies in vielen Beleuchtungssituationen bei Innenräumen der Fall ist. Solche Innenräume sind z.B. Konferenzräume oder Foyers von Theatern, Kinos, Bürogebäuden oder Hotels.

Mit Vorteil kann das mindestens eine Beleuchtungsmittel eine leuchtende Vorrichtung und / oder ein Reflektormittel für eine externe Lichtquelle aufweisen. Das mindestens eine Beleuchtungsmittel kann somit selbst leuchten, vorteilhafterweise mittels einer Lichtleitervorrichtung, eines OLED-Elements und / oder eines LED-Elements und / oder es kann externes Licht reflektieren. Dadurch kann die Beleuchtung sehr flexibel an die gestellte Aufgabe angepasst werden.

Mit Vorteil ist mindestens ein Beleuchtungsparameter der Lichtstrom, die Lichtstärke, die Beleuchtungsstärke, Leuchtdichte, die Beleuchtungsrichtung, die Fokussierung, die Polarisation, der Farbwiedergabeindex und / oder die Farbe des vom Beleuchtungsmittel ausgehenden Lichtes.

Zur Schaffung komplexerer Beleuchtungsvorrichtungen ist es insbesondere sinnvoll, wenn mindestens zwei Beleuchtungsmittel miteinander beweglich gekoppelt sind und über einen Antrieb mindestens teilweise relativ zum Objekt bewegbar sind. Besonders vorteilhaft ist es, wenn der Antrieb zur Bewegung der mindestens zwei Beleuchtungsmittel von der Datenverarbeitungsvorrichtung steuerbar ist.

Ein Beispiel für eine komplexere Beleuchtungsvorrichtung ist, wenn eine Vielzahl von Beleuchtungsmitteln, insbesondere gleichartige Beleuchtungsmittel, in einem regelmäßigen Muster angeordnet sind und die Änderung der räumlichen Lage der Beleuchtungsmittel aufeinander abstimmbar ist. Dabei ist es vorteilhaft, wenn die Vielzahl der Beleuchtungsmittel nach Plan untereinander, insbesondere nach einem vorbestimmbaren Plan, bewegbar sind.

Eine Möglichkeit, effizient größere Beleuchtungsvorrichtungen (z.B. Lichtstrukturen) zu schaffen, besteht darin, dass eine Vielzahl von Beleuchtungsmitteln zu einem Modul zusammengefasst wird, die in vorbestimmbarer Weise mit anderen gleichartigen Modulen mit Beleuchtungsmitteln bewegbar sind. Ein Beispiel für ein solches Modul weist mindestens zwei Beleuchtungsmittel in einer linearen Anordnung auf, wobei die Beleuchtungsmittel insbesondere im Wesentlichen senkrecht zu der linearen Anordnung bewegbar sind.

Auch kann in einer Ausführungsform eine Vielzahl von Modulen vorgesehen sein, die jeweils eine Vielzahl von Beleuchtungsmitteln aufweisen, wobei die Module kurvenförmig ausgebildet sind und die Module konzentrisch zueinander angeordnet sind. In einem einfachen Fall haben die Module z.B. die Form von Kreisringen, die konzentrisch angeordnet sind. Auch wenn die Module kurvenförmig sind und von der Kreisform abweichen, können solche Module mit gleicher Kurvenform konzentrisch angeordnet sein.
Bei einer weiteren Ausführungsform ist das Objekt mit mindestens einer Sensorvorrichtung, insbesondere für die mindestens eine Beleuchtungseigenschaft, gekoppelt und mit deren Messwert mindestens eine Beleuchtungseigenschaft, ein Beleuchtungsparameter und / oder die räumliche Lage des Beleuchtungsmittels einstellbar.

Eine Ausführungsform einer Beleuchtungsvorrichtung weist mindestens eine Sensorvorrichtung einen Temperatursensor auf, wobei die mindestens eine Beleuchtungseigenschaft in Abhängigkeit von der Temperatur einstellbar ist. Zusätzlich oder alternativ kann die mindestens eine Sensorvorrichtung einen Bewegungssensor aufweisen, wobei die mindestens eine Beleuchtungseigenschaft in Abhängigkeit von der Bewegung einstellbar ist. Mit diesen Sensorvorrichtungen kann die Beleuchtung des Objektes noch flexibler gehandhabt werden.

In einer Ausführungsform der Beleuchtungsvorrichtung ist mindestens ein Beleuchtungsmittel über eine Seilvorrichtung einen Linearantrieb, eine Zahnstangen-Ritzel-Vorrichtung und / oder ein Kugelgewindegetriebe bewegbar. Seilvorrichtungen und Antriebe sind z.B. zur Auf- und Abwicklung effizient steuerbar, so dass präzise Bewegungen von vielen Beleuchtungsmitteln gleichzeitig möglich sind. Zum Beispiel können über Umlenkrollen komplexe Konstruktionen von Beleuchtungsvorrichtungen realisiert werden. Je nach Anordnung der Beleuchtungsvorrichtung und auch der Traglast kann ein geeigneter Antrieb und eingeeignetes Kraft- und / oder Momentenübertragungsmittel gewählt werden. Auch können Kraft- und Momentenübertragungsmittel in Kombination verwendet werden.

Die Bewegung der Beleuchtungsmittel kann in einer weiteren Ausführungsform auch dadurch beeinflusst werden, indem mehrere Beleuchtungsmittel miteinander gekoppelt bewegbar sind, wobei Antriebe für die Bewegungen den Beleuchtungsmitteln zugeordnet sind. Auch ist es möglich, dass eine Vielzahl von Beleuchtungsmitteln miteinander zu einer flächigen oder räumlichen Anordnung zusammen gekoppelt sind und die Beleuchtungsmittel der Anordnung durch die Datenverarbeitungsvorrichtung koordiniert bewegbar sind.

Eine mögliche Ausführungsform der Beleuchtungsvorrichtung ist so ausgebildet, dass für die Vielzahl der Beleuchtungsmittel eine periodische Bewegung, insbesondere eine Wellenbewegung, eine Verformung der Form der Beleuchtungsvorrichtung und / oder eine Bewegung in Abhängigkeit von Daten einer Sensorvorrichtung ausführbar ist.

Die Beleuchtungsvorrichtung kann nicht nur Licht abstrahlen, sondern in einer Ausführungsform auch eine Information, insbesondere ein Bild oder ein Logo auf das Objekt projizieren.

In einer Ausführungsform umfasst die Beleuchtungsvorrichtung ein Steuerungsmittel, zur Erkennung und / oder Behebung einer Fehlfunktion der Bewegungssteuerung der Beleuchtungsmittel, insbesondere bei Überlast oder keiner Last.

Die Aufgabe wird auch durch ein Verfahren mit den Merkmalen des Anspruchs 15 gelöst.

Mittels einer Beleuchtungsvorrichtung mit mindestens einem Beleuchtungsmittel, wobei sich die räumliche Lage des mindestens einen Beleuchtungsmittels relativ zum Objekt zeitlich verändert, wird mindestens ein Beleuchtungsparameter für die Beleuchtung des Objekts in Abhängigkeit von der Lageänderung des Beleuchtungsmittels eingestellt. Dabei ist die Beleuchtung des Objektes von einer Datenverarbeitungsvorrichtung so steuerbar, dass mindestens eine Beleuchtungseigenschaft des mindestens einen Beleuchtungsmittels einem vorgegebenen Programm folgt, nämlich im Wesentlichen konstant bleibt, auch wenn sich die räumliche Lage des mindestens einen Beleuchtungsmittels ändert, wobei während der Bewegung des Beleuchtungsmittels die Leuchtstärke jeweils angepasst wird, entweder kontinuierlich oder in diskreten Schritten, so dass bei einer Bewegung auf das Objekt der Lichtstrom verringert wird, bei einer Bewegung vom Objekt weg die Lichtstärke erhöht wird, sodass die Beleuchtungseigenschaft durch die bewegliche Funktion der Beleuchtungsvorrichtung nicht beeinträchtigt wird.

In den folgenden Darstellungen werden beispielhaft Ausführungsformen beschrieben. Es zeigen
- Fig. 1: eine schematische perspektivische Darstellung einer Ausführungsform einer Beleuchtungsvorrichtung mit einem selbstleuchtenden Beleuchtungsmittel;
- Fig. 2: eine schematische perspektivische Darstellung einer Ausführungsform einer Beleuchtungsvorrichtung mit einem reflektiven
- Fig. 3: eine Variante der Ausführungsform gemäß Fig. 1 mit einer Sensorvorrichtung;
- Fig. 3A: eine Variante der Ausführungsform gemäß Fig. 3 mit einer Vielzahl von Sensorvorrichtungen;
- Fig. 4A: eine Ausführungsform mit einer Vielzahl gekoppelter Beleuchtungsmittel zu einem ersten Zeitpunkt;
- Fig. 4B: die Ausführungsform gemäß Fig. 4A mit einer Vielzahl gekoppelter Beleuchtungsmittel zu einem späteren Zeitpunkt;
- Fig. 5A-C: eine Ausführungsform einer Beleuchtungsvorrichtung mit einer Vielzahl von Beleuchtungsmitteln zu drei verschiedenen Zeitpunkten.

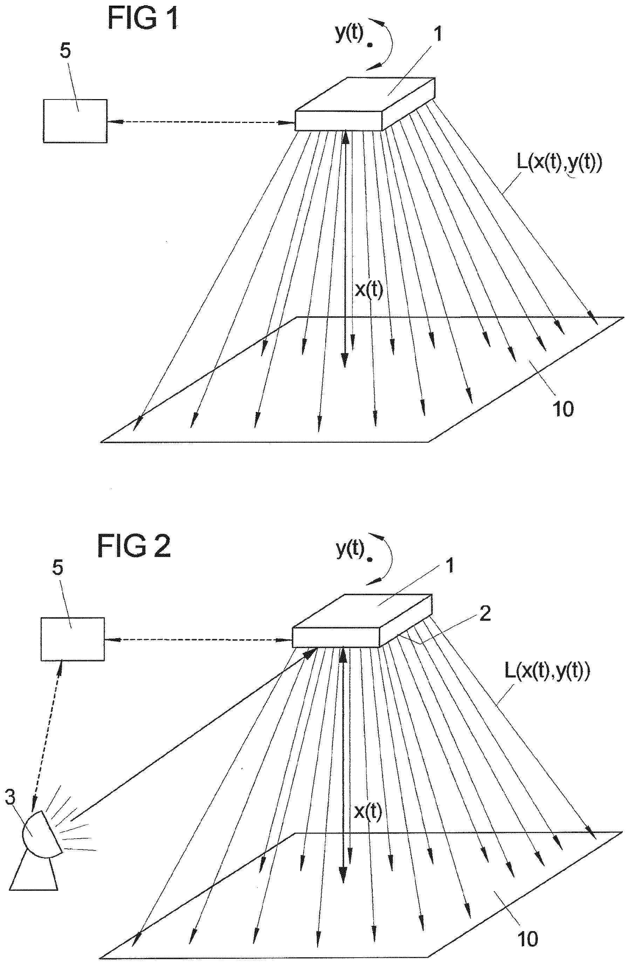

In Fig. 1 ist eine Beleuchtungsvorrichtung 100 mit einem einzigen Beleuchtungsmittel 1 dargestellt. Im dargestellten Fall ist das Beleuchtungsmittel 1 als ein im Wesentlich rechteckiger Körper ausgebildet, der auf der Seite, die einem zu beleuchtenden Objekt 10 zugewandt ist, eine Reihe von OLED- und / oder LED-Elementen aufweist.

In alternativen Ausführungsformen kann das Licht auch über Lichtleitervorrichtung, wie z.B. Glasfaser, in das Beleuchtungsmittel 1 geführt werden. Damit kann die eigentliche Lichtquelle in einiger Entfernung vom Beleuchtungsmittel 1 angeordnet sein, wobei die Lichtstrahlung zur Belichtung aus dem Beleuchtungsmittel 1 austritt. Die Beleuchtungsmittel 1 können z.B. als lichtransparente, vorzugsweise flache, Licht abstrahlende Körper ausgebildet sein, in die das Licht durch die Lichtleitervorrichtung eingekoppelt wird. Die Lichtquellen können in einem Beleuchtungsmittel 1 auch miteinander kombiniert werden. Werden mehr als ein Beleuchtungsmittel 1 verwendet, so können innerhalb der Beleuchtungsvorrichtung 100 unterschiedliche Lichtquellen verwendet werden.

Diese Elemente können sehr helles Licht in unterschiedlichen Farben oder in Weiß, abstrahlen. Auch verbrauchen OLED- und / oder LED-Elemente sehr wenig Strom. Auch kann die Helligkeit gut gesteuert werden.

Unter anderem wird die Beleuchtungsvorrichtung 100 die Eigenschaft haben eine Fläche 10 konstant oder im Wesentlichen konstant auszuleuchten. Auch wenn die Beleuchtungsmittel 1 der Beleuchtungsvorrichtung 100 Bewegungen ausführen.

Nach dem Entfernungsquadratgesetz ist die Ausbreitungsfläche des Lichtstromes einer zentrischen Streckung unterworfen was zur Folge hat, dass sich die Lichtstärke proportional zum Quadrat der Entfernung (d.h. dem Abstand x(t)) verhält.

Die beiden im Folgenden beschriebenen Ausführungsformen verwenden diese physikalischen Eigenschaften zur Steuerung oder Regelung über die Datenverarbeitungsvorrichtung 5:
1. Bei einer Konstantlichtsteuerung wird mit Hilfe der Datenverarbeitungsvorrichtung 5 die Lichtstärke in Abhängigkeit von der Bewegung der Beleuchtungsmittel 1 (z.B. ermittelt aus den Daten für die Abstands- bzw. Höhenpositionierung des Beleuchtungsmittels 1 im Verhältnis zur auszuleuchtenden Fläche 10) so angesteuert, dass die Lichtstärke der auszuleuchten Fläche 10 immer (im Wesentlichen) konstant sind. Dies kann z.B. unter Verwendung einer Datenbank für den Bewegungsablauf erfolgen oder über mindestens eine Sensorvorrichtung 4 (in Verbindung mit der Datenverarbeitungsvorrichtung 5) für die Erfassung der tatsächlichen Positionen der Beleuchtungsmittel 1 ausgeführt werden.
2. Bei einer Konstantlichtregelung wird mit Hilfe von mindestens einer Sensorvorrichtung 4 die Lichtstärke der auszuleuchtenden Fläche 10 erfasst und mittels der Datenverarbeitungsvorrichtung 5 ein Regelkreis aufgebaut, bei dem wie bei der zuvor dargestellten Steuerung aus den Daten für die Abstands- bzw. Höhenpositionierung im Verhältnis zur auszuleuchtenden Fläche 10, die Lichtstärke (im Wesentlichen) konstant geregelt wird.

In anderen Ausführungsformen können auch andere Leuchtmittel, wie Temperaturstrahler (wie z.B. eine Glühlampe oder eine Halogenlampe), Entladungslampen, Niederdrucklampen (z.B. Energiesparlampen), Hochdrucklampen und / oder andere Leuchtmittel verwendet werden. Auch ist es möglich, unterschiedliche Leuchtmittel miteinander zu kombinieren, insbesondere auch durch Verwendung unterschiedlich farbiger Leuchtmittel.

Das Beleuchtungsmittel 1 leuchtet das Objekt 10 aus. Das Objekt 10 ist hier aus Gründen der zeichnerischen Einfachheit als Fläche dargestellt, wobei die Beleuchtung von Flächen wie Schreibtischen, Böden, Decken etc. eine häufige Aufgabe ist. Der Begriff Objekt 10 ist hier aber nicht auf die gezielte Beleuchtung von Decken beschränkt. Vielmehr können auch Räume oder dreidimensionale Objekte 10 (Körper) von einem Beleuchtungsmittel 1 beleuchtet werden. Die Beleuchtungsaufgabe kann auch die Kombination der Beleuchtung einer Fläche, eines Körpers und / oder eines Raumes umfassen.

Das Beleuchtungsmittel 10 weist einen Abstand x von dem beleuchteten Objekt 10, d.h. der Fläche, auf. Im vorliegenden Fall ist das Objekt 10 genau unterhalb des Beleuchtungsmittels 1 angeordnet, es kann aber grundsätzlich jede relative Lage zum Beleuchtungsmittel 1 aufweisen, so lange eine Beleuchtung noch möglich ist. Im vorliegenden Fall soll der Fall der Beleuchtung eines Bodens in einem Raum beschrieben werden.

In anderen Ausführungsformen könnte die Fläche 10 auch eine Decke sein, die von dem Beleuchtungsmittel 1 im Rahmen einer indirekten Beleuchtung angestrahlt wird.

Das vom Beleuchtungsmittel 1 abgestrahlte Licht weist eine Reihe von Beleuchtungsparametern L auf, die für die Beleuchtungsaufgabe definiert sein müssen. Wie später noch beschrieben wird, wird mindestens ein Beleuchtungsparameter L des Beleuchtungsmittels 1 gezielt gesteuert.

Ein Beispiel für einen Beleuchtungsparameter L ist der Lichtstrom, der in Lumen gemessen wird. Der Lichtstrom beschreibt die gesamte vom Beleuchtungsmittel 1 abgegebene Lichtleistung unter Berücksichtigung der spektralen Empfindlichkeit des menschlichen Auges.

Ein weiterer Beleuchtungsparameter L ist die Lichtstärke, die in Candela (Lumen / Steradiant) gemessen wird. Hier wird also die räumliche Verteilung des Lichtstroms abgebildet. Grundsätzlich können von der Einheit Candela alle anderen Einheiten der Lichttechnik abgeleitet werden.

Auch die Beleuchtungsstärke (gemessen in Lux) als Maß für die Lichtstromdichte (d.h. ein Maß für die auf eine Fläche auftreffende Lichtleistung) ist ein Beleuchtungsparameter L. Die Leuchtdichte beschreibt das von einem Beleuchtungsmittel 1 ausgehende Licht. Die Leuchtdichte ist definiert als Verhältnis der Lichtstärke zur senkrecht zur Ausstrahlungsrichtung projizierten Fläche.

Ferner kann auch der Farbwiedergabeindex ein Beleuchtungsparameter L sein. Unter Farbwiedergabeindex Ra versteht man eine photometrische Größe, mit der sich die Qualität der Farbwiedergabe von Lichtquellen (hier Beleuchtungsmitteln 1) gleicher korrelierter Farbtemperatur beschreiben lässt. Da die hier beschriebene Beleuchtungsvorrichtung 100 in besonders flexibler angepasster Weise steuerbar ist und auch Leuchtmittel unterschiedlicher Farbtemperatur aufweisen kann, kann der Farbwiedergabeindex ein sinnvoller Beleuchtungsparameter L sein.

Das Licht des Beleuchtungsmittels 1 kann aber auch von der Fläche des Objektes 10 reflektiert oder transmittiert werden. Für gestreut reflektierende (matte) und für gestreut transmittierende (trübe) Materialien kann die Leuchtdichte hierbei aus der Beleuchtungsstärke und dem Reflexions- bzw. Transmissionsgrad berechnet werden.

Die Leuchtdichte bildet somit die Grundlage der von einem Menschen wahrgenommenen Helligkeit; der tatsächliche Helligkeitseindruck wird allerdings noch vom Adaptationszustand des Auges, den umgebenden Kontrastverhältnissen und dem Informationsgehalt der gesehenen Fläche beeinflusst.

Hinzu kommt noch die Farbe des Lichtes, mithin eine frequenzabhängige Eigenschaft.

Auch kann das Beleuchtungsmittel 1 eine Vorrichtung zur Fokussierung aufweisen. Wenn die Beleuchtungsvorrichtung 100 dazu verwendet wird, z.B. ein Bild auf eine Fläche zu projizieren, kann es sinnvoll sein, den Fokus der Beleuchtung jeweils an die Bewegung und / oder räumliche Lage des Beleuchtungsmittels 1 anzupassen.

Je nach Beleuchtungsaufgabe wird man zur Charakterisierung einen oder mehrere Beleuchtungsparameter L, z.B. einige der oben genannten, auswählen.

In der dargestellten Ausführungsform ist der Abstand x(t) des Beleuchtungsmittels 1 vom Objekt 10 zeitlich variabel. In einem Fall bewegt sich das Beleuchtungsmittel unter beliebiger Veränderung des Abstandes x(t), insbesondere periodisch nach oben und nach unten, so dass der Abstand x(t) sich mit der Zeit vergrößert und verringert.

Allgemein ist die räumliche Lage des Beleuchtungsmittels 1 relativ zum Objekt 10 zeitlich variabel (dynamisch). In anderen Ausführungsformen sind alternativ oder zusätzlich noch andere zeitlich abhängige Lageänderungen des Beleuchtungsmittels 1 möglich. So kann die räumliche Orientierung y(t) des Beleuchtungsmittels 1 zeitlich verändert werden. Dies bedeutet, dass die Strahlungsrichtung zeitlich variabel ist; das Objekt 10 wird z.B. zu einem Zeitpunkt direkt von oben beleuchtet, zu einem späteren Zeitpunkt aus einem flachen Winkel. Durch eine zeitlich abhängige Verschwenkung des Beleuchtungsmittels 1 kann dieser Effekt erreicht sein.

Bei allen Lageänderungen des Beleuchtungsmittels 1 kann z.B. auf eine veränderte Lage (z.B. Differenz zwischen zwei Orten), auf die Geschwindigkeit der Lageänderung und / oder die Beschleunigung der Lageänderung Bezug genommen werden, wenn - wie in der Folge beschrieben - mindestens ein Beleuchtungsparameter L(x(t), y(t)) (allgemein L(t)) in Abhängigkeit von deren Lageänderung des Beleuchtungsmittels 1 eingestellt wird.

Im Fall der Fig. 1 kann dies z.B. bedeuten, dass der Lichtstrom des Beleuchtungsmittels 1 als Funktion des Abstandes x(t) gesteuert wird. Wenn beabsichtigt ist, dass das Objekt gleichmäßig ausgeleuchtet wird, so muss der Lichtstrom bei einem großen Abstand x(t) größer sein, als bei einem kleinen Abstand x(t). Während der Bewegung des Beleuchtungsmittels 1 wird die Leuchtstärke jeweils angepasst, entweder kontinuierlich oder in diskreten Schritten, so dass bei einer Bewegung auf das Objekt 10, der Lichtstrom verringert wird, bei einer Bewegung vom Objekt 10 weg, die Lichtstärke erhöht wird.

Die Zielfunktion der Ausleuchtung kann dabei in weitem Rahmen definiert werden. Eine gleichmäßige Ausleuchtung, wie im obigen Beispiel dargestellt, kann z.B. berücksichtigen, dass das Auge bestimmte nicht-lineare Wahrnehmungscharakteristiken hat. So wird Licht z.B. in Abhängigkeit von der Farbe, der Helligkeit und / oder dem Blickwinkel unterschiedlich wahrgenommen. Die zeitlich abhängige Funktion der Beleuchtungsparameter L(t) kann dem Rechnung tragen, da das Beleuchtungsmittel 1 mit einer Datenverarbeitungsvorrichtung 5 gekoppelt ist. Damit kann in Abhängigkeit von der räumlichen Lageänderung und der gestellten Beleuchtungsaufgabe, eine Anpassung der Beleuchtungsparameter L erfolgen.

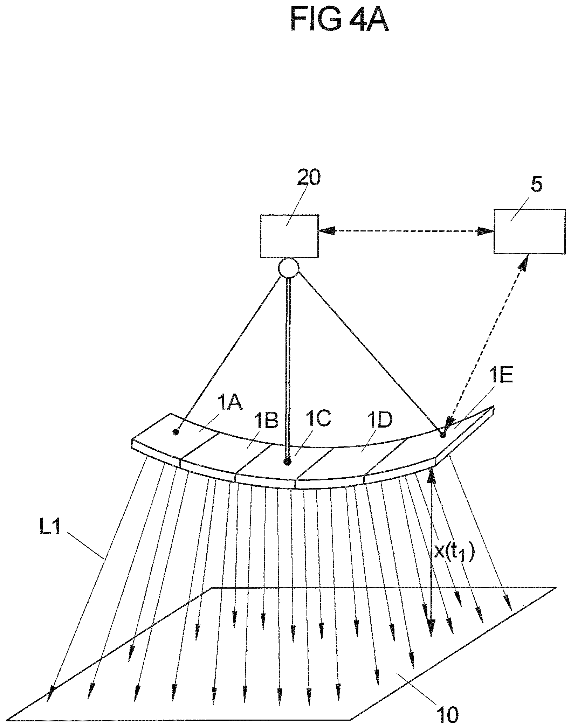

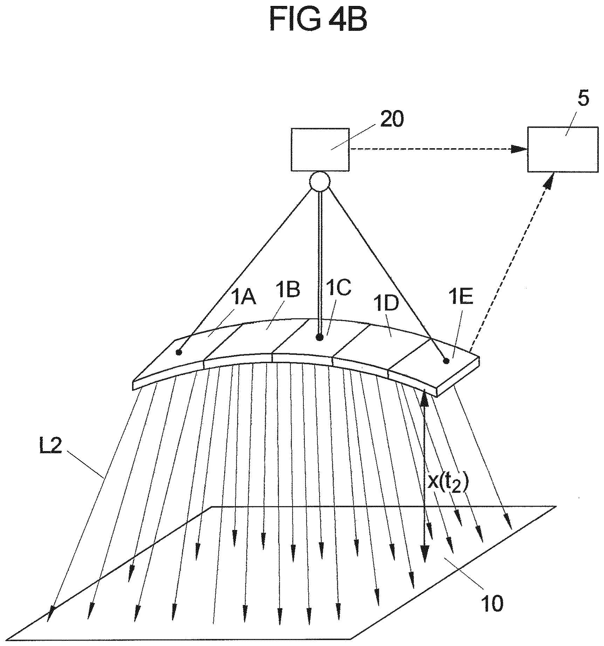

In Fig. 1 ist in schematischer Weise ein prinzipieller Aufbau mit nur einem Beleuchtungsmittel 1 dargestellt. Das Prinzip lässt aber vielfältige Abwandlungen zu. So kann das Beleuchtungsmittel 1 selbst anders gestaltet sein (Fig. 2) oder das Bewegungsmuster der Beleuchtungsmuster (Fig. 4A, 4B).

In Fig. 2 ist grundsätzlich der gleiche Aufbau einer Beleuchtungsvorrichtung wie in Fig. 1 dargestellt, so dass auf die Fig. 1 Bezug genommen werden kann. Im Unterschied zur Ausführungsform gemäß Fig. 1 ist hier das Beleuchtungsmittel 1 nicht selbstleuchtend. Vielmehr weist das Beleuchtungsmittel 1 ein Reflektormittel 2 für eine externe Lichtquelle 3 auf. Diese strahlt auf den Reflektor, über den das Licht dann auf das Objekt 10 gelangt. Wenn das Beleuchtungsmittel 1 seine räumliche Lage verändert, wird die externe Lichtquelle 3 entsprechend nachgeführt. Die Einstellung des mindestens einen Beleuchtungsparameters L(t) erfolgt somit durch die Steuerung der externen Strahlungsquelle 3 und / oder des Beleuchtungsmittels 1 durch die Datenverarbeitungsvorrichtung 5.

Alternativ ist es auch möglich, dass das Beleuchtungsmittel 1 sich bewegt, aber die externe Lichtquelle 3 nicht nachgeführt wird.

Werden mehrere Beleuchtungsmittel 1 in einer Beleuchtungsvorrichtung 100 verwendet, so kann die Lichteinspeisung für die Beleuchtungsmittel 1 unterschiedlich sein.

Grundsätzlich ist es auch möglich, dass ein Beleuchtungsmittel 1 selbstleuchtende Leuchtmittel und Reflektormittel 2 aufweist, so dass die Ausführungsformen gemäß Fig. 1 und 2 miteinander kombinierbar sind.

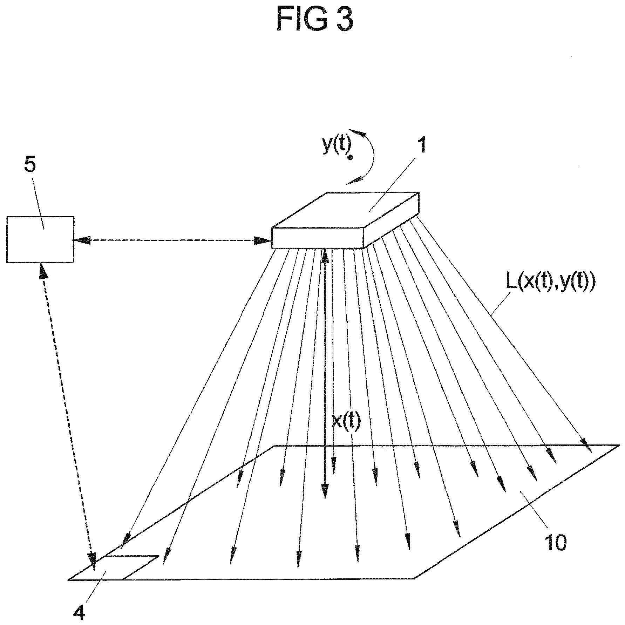

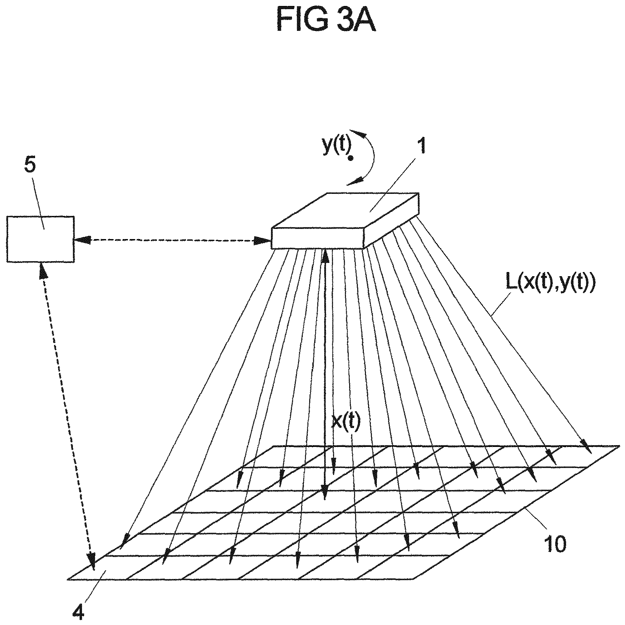

In Fig. 3 ist eine Abwandlung der ersten Ausführungsform dargestellt, so dass auf die entsprechende Beschreibung Bezug genommen werden kann. Hier ist am oder in der Nähe des Objektes 10 eine Sensorvorrichtung 4 angeordnet, die für mindestens einen Beleuchtungsparameter oder eine Beleuchtungseigenschaft empfindlich ist. Damit kann das Ergebnis der Beleuchtung durch das Beleuchtungsmittel 1 erfasst werden und ein Signal an die Datenverarbeitungsvorrichtung 5 gesandt werden. Durch die ermittelten Messwerte mindestens eines Beleuchtungsparameters L ist eine Regelung des Beleuchtungsergebnisses (z.B. der Beleuchtungseigenschaft des Objekts 10) möglich, da die Datenverarbeitungsvorrichtung 5 das Beleuchtungsmittel 1 ansteuern kann.
Es ist aber nicht zwingend, dass die Sensorvorrichtung 4 zwingend auf einen Beleuchtungsparameter L reagiert. Zusätzlich oder alternativ kann die Sensorvorrichtung z.B. auch die Bewegung einer Person erfassen und in Abhängigkeit davon die Beleuchtung des Objektes 10 steuern. Auch ist es möglich, dass die Temperatur von der Sensorvorrichtung 4 erfasst wird, und ein Beleuchtungsparameter L in Abhängigkeit von der Temperatur gesteuert wird.

Auch ist es möglich, dass die Sensorvorrichtung 4 im Ergebnis das Beleuchtungsergebnis am Objekt 10 misst, d.h. es wird die Beleuchtungseigenschaft am Objekt 10 gemessen.

In Fig. 3A ist eine Variante der Ausführungsform gemäß Fig. 3 dargestellt, so dass auf die obige Beschreibung Bezug genommen wird. Hier ist eine Sensorvorrichtung 4 so angeordnet, dass sie das Objekt 10 zumindest teilweise abdeckt. Dies kann z.B. eine Vielzahl von Photosensoren 4 sein, die in Form eines Rasters oder einer anderen Anordnung den Lichtstrom L auf das Objekt 10 messen und die Messwerte an die Datenverarbeitungsvorrichtung 5 übermitteln. In Abhängigkeit von den Messwerten kann dann eine angepasste Beleuchtung des Objektes 10 - z.B. auch bei sich ändernden Lichtverhältnissen - erfolgen.

Eine solche Regelung ist auch im Zusammenhang mit der Ausführungsform gemäß Fig. 2 oder einer Kombination der Ausführungsformen möglich.

In Fig. 4A, 4B ist eine Beleuchtungsvorrichtung zu zwei unterschiedlichen Zeitpunkten t₁, t₂ dargestellt.

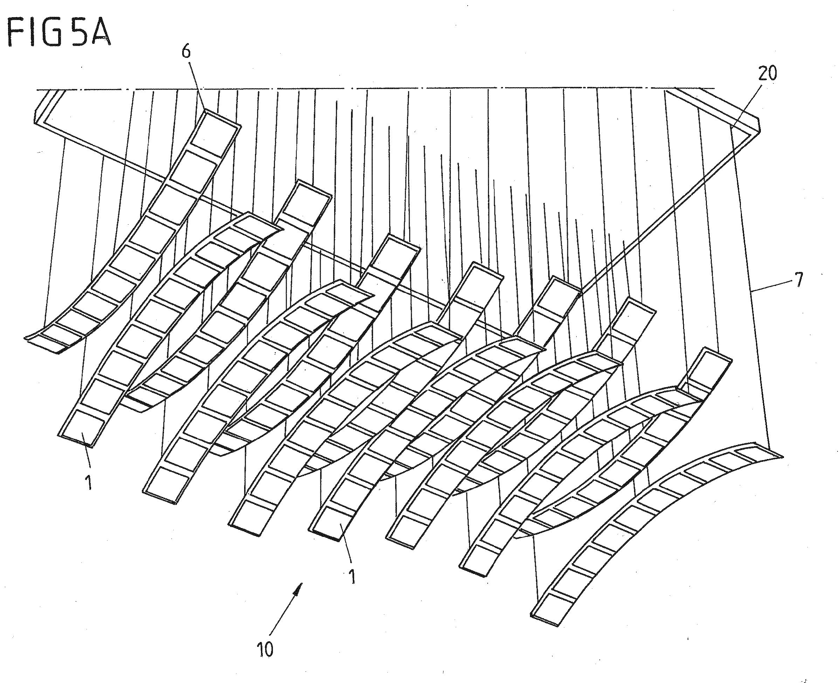

Anders als bei den Ausführungsbeispielen gemäß Fig. 1 oder 2, wird hier eine Vielzahl von Beleuchtungsmitteln 1A, 1B, 1C, 1D, 1E verwendet, die alle zu einem streifenförmigen Modul 6 (siehe z.B. Fig. 5A) angeordnet sind. Die Beleuchtungsmittel 1A, 1B, 1C, 1D, 1E sind linear angeordnet.

Die einzelnen Beleuchtungsmittel (1A, 1B, 1C, 1D, 1E) sind hier rechteckige Elemente, die mit OLED-Elementen versehen sind. Die einzelnen Elemente der Beleuchtungsmittel (1A, 1B, 1C, 1D, 1E) sind gelenkig miteinander verbunden.

Die beiden außenstehenden Beleuchtungsmittel 1A, 1E sind jeweils über eine Seilvorrichtung 7 mit einem Antrieb 20 verbunden. Das mittlere Beleuchtungsmittel 1C ist über eine Stange starr mit der Decke verbunden. Der Abstand dieses Beleuchtungsmittels 1C zum Objekt ist konstant, alle anderen Beleuchtungsmittel 1A, 1B, 1D, 1E ändern ihre Lage relativ zum Objekt 10. Dies ist in Fig. 4A, B durch die zeitlich variablen Abstände x(t₁) und x(t₂) dargestellt.

Wird nun die Seilvorrichtung 7 zu den äußeren Beleuchtungsmitteln 1A, 1E periodisch verkürzt und verlängert, so führt die Gesamtheit der Beleuchtungsmittel 1A, 1B, 1C, 1D, 1E eine Art Biegebewegung durch. In Fig. 4A ist die Situation dargestellt, in der die Seilvorrichtung 7 die äußeren Beleuchtungsmittel 1A, 1E nach oben gezogen hat (Abstand x(t₁)), in Fig. 4B ist dargestellt, dass die Seilvorrichtung 7 die äußeren Beleuchtungsmittel 1A, 1E nach unten gelassen hat (Abstand x(t₂)).

Im zeitlichen Ablauf vollführt das streifenförmige Modul 6 aus Beleuchtungselementen 1A, 1B, 1C, 1D, 1E eine Art Flatterbewegung, d.h. sie werden im Wesentlichen senkrecht zu ihrer linearen Erstreckung auf und ab bewegt.

Werden mehrere dieser Module 6 von Beleuchtungsmitteln 1A, 1B, 1C, 1D, 1E hintereinander angeordnet (siehe Fig. 5A bis 5C), so wird z.B. Beleuchtungsvorrichtung 100 ermöglicht, mit der sich eine Wellenbewegung (in Anmutung der Bewegung eines Mantarochens) darstellen lässt, wobei sich die Wellenbewegung aus den einzelnen Modulen 6 aus Beleuchtungsmitteln 1 zusammensetzt, und deren Beleuchtungsparameter L entsprechend der Bewegung gesteuert werden. Dies wird in Zusammenhang mit Fig. 5A-C noch näher erläutert werden.

Eine solche Beleuchtungsvorrichtung 100 kann z.B. zur Beleuchtung eines größeren Raumes, z.B. der Eingangshalle eines Hotels oder Bürohauses eingesetzt werden. Trotz der Bewegung zumindest einzelner Beleuchtungsmittel 1, würde die Beleuchtungsvorrichtung programmgemäß (d.h. automatisch) so gesteuert werden, dass im beleuchteten Bereich eine im Wesentlichen gleichmäßige Beleuchtung herrscht. Die Beleuchtungseigenschaft, d.h. Beleuchtungsfunktion wird durch die bewegliche Funktion der Beleuchtungsvorrichtung nicht beeinträchtigt.

In Fig. 5A-C ist jeweils eine an einer Decke hängende Beleuchtungsvorrichtung 100 mit beweglichen Modulen 6 aus Beleuchtungsmitteln 1 zu unterschiedlichen Zeitpunkten dargestellt.

Die einzelnen Module 6 sind dabei, wie in Fig. 4A, B beschrieben, an Seilvorrichtungen angeordnet. Die starren Widerlager (in Fig. 4A, B ist das Widerlager als Stange ausgebildet) sind hier aus Gründen der Einfachheit nicht dargestellt.

Fig. 5A zeigt vierzehn, von der Decke hängende Module 6, die jeweils mit zehn Beleuchtungsmitteln 1 versehen sind. Jedes der Module 6 ist dabei eine lineare, streifenartige Anordnung der Beleuchtungsmittel 1, die - wie in Fig. 4A, B dargestellt - nach oben und unten durchbiegbar ist. Die insgesamt 140 Beleuchtungsmittel 1 bilden ein regelmäßiges Muster in Form eines Rasters.

Durch die Seilvorrichtungen 7 können die Krümmungen aller Module 6 einzeln über Antriebe 20, die in der Decke angeordnet sind, angesteuert werden. In Fig. 5A weisen jeweils nebeneinander hängende Module 6 gegensätzliche Krümmungen auf. Die leuchtende Fläche der Beleuchtungsvorrichtung 100 weist an den Übergängen jeweils Diskontinuitäten auf.

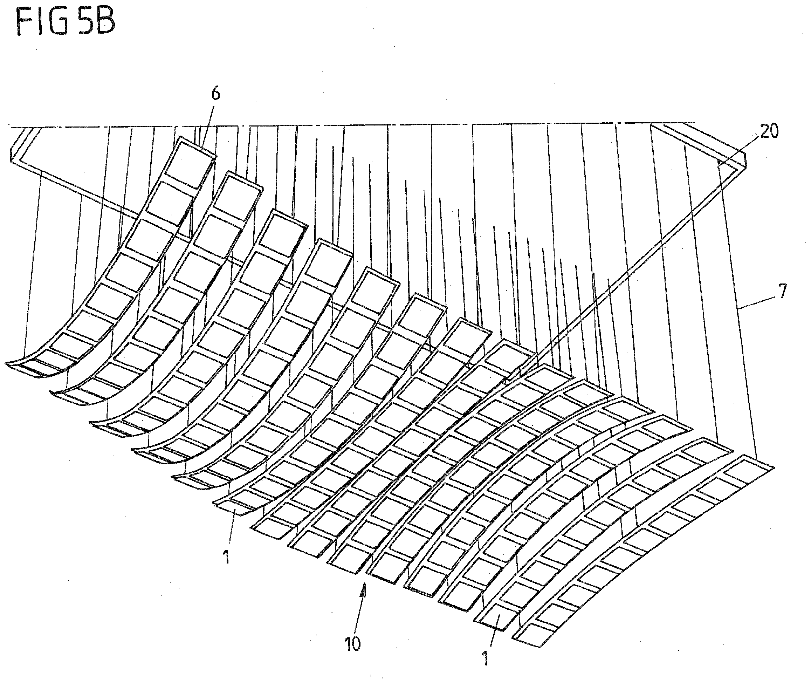

Zu einem anderen Zeitpunkt, z.B. dem Zeitpunkt, der in Fig. 5B dargestellt ist, können die Module 6 andere Formen annehmen, so dass die leuchtende Fläche der Beleuchtungsvorrichtung 100 eine glatte, geschwungene Form aufweist. An der linken Seite der Fig. 5B sind die Module 6 nach unten gewölbt, an der rechten Seite der Fig. 5B sind die Module 6 nach oben gewölbt. Alle Module zwischen den Randmodulen bilden einen sanften Übergang aus, so dass räumlich der Eindruck einer leuchtenden, flächigen Welle entsteht.

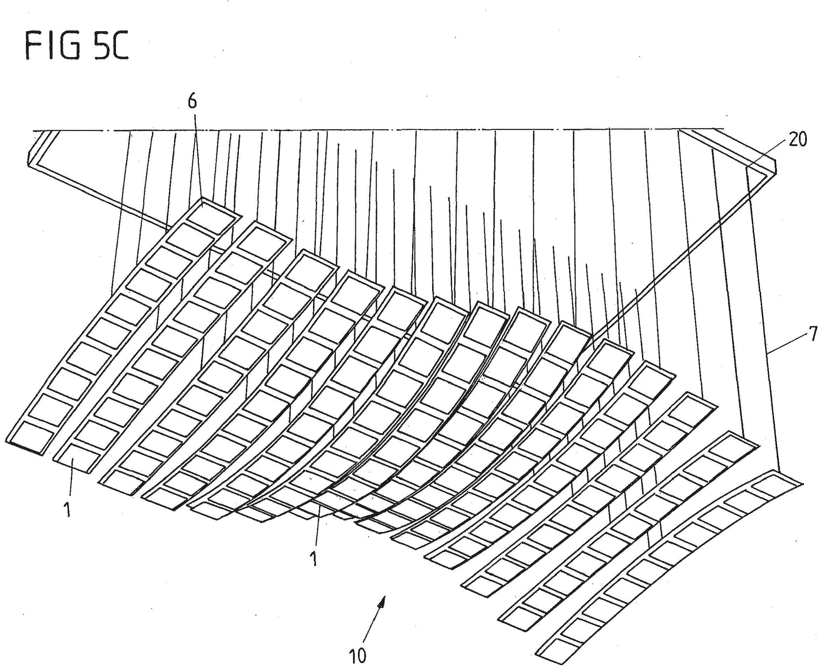

Diese Welle ist aber nicht statisch, da sich die Wölbungen zu einem anderen Zeitpunkt, wie in Fig. 5C dargestellt, anders ausbilden, so dass die Beleuchtungsvorrichtungen 100 ein anderes Aussehen hat.

Wenn nun die Module 6 der Beleuchtungsvorrichtung 100 nach einem vorbestimmten Plan durch die Seilvorrichtungen 7 bewegt werden, können komplexe und auch ästhetisch ansprechende Bewegungen (oder Verformungen) der Beleuchtungsvorrichtung 100 vorgenommen werden. Die Ansteuerung der einzelnen Beleuchtungsmittel 1 erfolgt - wie oben beschrieben - über die hier nicht dargestellte Datenverarbeitungsvorrichtung 5 nach einem vorbestimmbaren Plan. Auch können Sensorvorrichtungen 4 verwendet werden, so dass auf Umgebungseinflüsse reagiert werden kann.

Es ist dabei nicht zwingend, dass die Beleuchtungsmittel 1 in einem rechteckigen Raster angeordnet sind, um die Beleuchtungsvorrichtung 100 zu bilden. In alternativen Ausgestaltungen kann die Anordnung einem anderen Muster folgen. Es ist nicht notwendig, dass die Module 6 die Form länglicher Streifen haben. Vielmehr können die Module 6 z.B. aus nur zwei Beleuchtungsmitteln 1 bestehen, die gelenkig miteinander verbunden sind. Auch runde oder kurvenförmige Formen von Modulen 6, bei denen die Beleuchtungsmittel 1 konzentrisch in Kreisen angeordnet sind, sind denkbar.

In Fig. 4 und 5 werden die einzelnen Beleuchtungsmittel 1 der Beleuchtungsvorrichtung 100 durch Seilvorrichtungen 7 angetrieben, die mit einem Antrieb 20 in Verbindung stehen. Alternativ oder zusätzlich ist es aber auch möglich, dass die räumliche Lage der Beleuchtungsmittel 1, insbesondere wenn eine Vielzahl von Beleuchtungsmitteln 1 miteinander beweglich verbunden sind, durch andere Mittel in Bewegung versetzt werden können. Anstelle von Seilvorrichtungen 7 können z.B. auch Zahnstangen oder Kugelgewindetriebe verwendet werden. Antriebe 20 können z.B. auch direkt mit den Beleuchtungsmitteln 1 gekoppelt sein, so dass die Antriebe 20 näher an den Beleuchtungsmitteln 1 angeordnet sind. Die Beleuchtungsvorrichtung 100 könnte somit eigenständige Bewegungen ausführen, wobei die Beleuchtungsparameter L entsprechend der Bewegungen gesteuert werden.

### Bezugszeichenliste

- 1: Beleuchtungsmittel
- 2: Reflektormittel
- 3: externe Lichtquelle
- 4: Sensorvorrichtung
- 5: Datenverarbeitungsvorrichtung
- 6: Modul
- 7: Seilvorrichtung

- 10: Objekt
- 20: Antrieb

- 100: Beleuchtungsvorrichtung

- L, L1, L2: Beleuchtungsparameter

- x(t): Abstand Beleuchtungsmittel - Objekt
- y(t): Orientierung Beleuchtungsmittel relativ zu Objekt

## Patentansprüche

1. Beleuchtungsvorrichtung zur Beleuchtung eines Objektes, umfassend mindestens ein Beleuchtungsmittel (1), dessen räumliche Lage relativ zum Objekt (10) zeitlich veränderlich ist und mindestens ein Beleuchtungsparameter (L1, L2) für die Beleuchtung des Objekts (10) in Abhängigkeit von der Lageänderung des Beleuchtungsmittels (1) einstellbar ist,
**dadurch gekennzeichnet, dass**
die Beleuchtung des Objektes (10) von einer Datenverarbeitungsvorrichtung (5) so gesteuert wird, dass mindestens eine Beleuchtungseigenschaft des mindestens einen Beleuchtungsmittels (1) einem vorgegebenen Programm folgt, nämlich im Wesentlichen konstant bleibt, auch wenn sich die räumliche Lage des mindestens einen Beleuchtungsmittels (1) ändert, wobei während der Bewegung des Beleuchtungsmittels (1) die Leuchtstärke jeweils angepasst wird, entweder kontinuierlich oder in diskreten Schritten, so dass bei einer Bewegung auf das Objekt (10) der Lichtstrom verringert wird, bei einer Bewegung vom Objekt (10) weg die Lichtstärke erhöht wird, sodass im beleuchteten Bereich eine im wesentlichen gleichmäßige Beleuchtung herrscht, und sodass die Beleuchtungseigenschaft durch die bewegliche Funktion der Beleuchtungsvorrichtung nicht beeinträchtigt wird.

2. Beleuchtungsvorrichtung nach Anspruch 1, **dadurch gekennzeichnet, dass** die räumliche Lage des mindestens einen Beleuchtungsmittels (1) relativ zum Objekt (10) durch einen zeitlich variablen Abstand (x(t)), dessen zeitlich variable Orientierung (y(t)) relativ zu dem Objekt (10) und / oder dessen Bewegungsbahn relativ zum Objekt (10) bestimmt ist.

3. Beleuchtungsvorrichtung nach Anspruch 1 oder 2,
**dadurch gekennzeichnet, dass** die Lageänderung des mindestens einen Beleuchtungsmittels (1) durch eine veränderte Lage, insbesondere die Differenz zwischen zwei Orten, durch die Geschwindigkeit der Lageänderung und / oder die Beschleunigung der Lageänderung bestimmt ist.

4. Beleuchtungsvorrichtung nach mindestens einem der vorhergehenden Ansprüche, **dadurch gekennzeichnet, dass** der mindestens eine Beleuchtungsparameter (L1, L2) der Lichtstrom, die Lichtstärke, die Beleuchtungsstärke, Leuchtdichte, die Beleuchtungsrichtung, die Fokussierung, die Polarisation, der Farbwiedergabeindex und / oder der Farbwert des vom Beleuchtungsmittel (1) ausgehenden Lichts ist.

5. Beleuchtungsvorrichtung nach mindestens einem der vorhergehenden Ansprüche, **dadurch gekennzeichnet, dass** mindestens zwei Beleuchtungsmittel (1A, 1B, 1C, 1D, 1E) miteinander beweglich gekoppelt sind und über einen Antrieb (20) mindestens teilweise relativ zum Objekt (10) bewegbar sind.

6. Beleuchtungsvorrichtung nach Anspruch 5, **dadurch gekennzeichnet, dass** der Antrieb (20) zur Bewegung der mindestens zwei Beleuchtungsmittel (1A, 1B, 1C, 1D, 1E) von der Datenverarbeitungsvorrichtung (5) steuerbar ist.

7. Beleuchtungsvorrichtung nach mindestens einem der vorhergehenden Ansprüche, **dadurch gekennzeichnet, dass** eine Vielzahl von Beleuchtungsmitteln (1A, 1B, 1C, 1D, 1E), insbesondere gleichartige Beleuchtungsmittel (1), in einem regelmäßigen Muster angeordnet sind und die Änderung der räumlichen Lage der Beleuchtungsmittel (1A, 1B, 1C, 1D, 1E) aufeinander abstimmbar ist.

8. Beleuchtungsvorrichtung nach mindestens einem der vorhergehenden Ansprüche, **dadurch gekennzeichnet, dass** eine bestimmte Anzahl von Beleuchtungsmitteln (1A, 1B, 1C, 1D, 1E) zu einem Modul (6) zusammengefasst werden, die in vorbestimmbarer Weise mit anderen gleichartigen Modulen (6) aus Beleuchtungsmitteln (1A, 1B, 1C, 1D, 1E) bewegbar sind, wobei ein Modul (6) mindestens zwei Beleuchtungsmittel (1) in einer linearen Anordnung aufweist, wobei die Beleuchtungsmittel (1) insbesondere im Wesentlichen senkrecht zu der linearen Anordnung bewegbar sind.

9. Beleuchtungsvorrichtung nach mindestens einem der vorhergehenden Ansprüche, **gekennzeichnet durch** eine Vielzahl von Modulen (6), die eine Vielzahl von Beleuchtungsmitteln (1) aufweisen, wobei die Module (6) kurvenförmig ausgebildet sind und die Module (6) konzentrisch zueinander angeordnet sind.

10. Beleuchtungsvorrichtung nach mindestens einem der vorhergehenden Ansprüche, **dadurch gekennzeichnet, dass** ein Objekt (10) mit mindestens einer Sensorvorrichtung (4), insbesondere für die mindestens eine Beleuchtungseigenschaft, gekoppelt ist und mit deren Messwert mindestens ein Beleuchtungsparameter (L1, L2) und / oder die räumliche Lage des Beleuchtungsmittels (1) einstellbar ist.

11. Beleuchtungsvorrichtung nach Anspruch 10, **dadurch gekennzeichnet, dass** die mindestens eine Sensorvorrichtung (4) einen Temperatursensor und / oder einen Bewegungssensor aufweist, wobei die mindestens eine Beleuchtungseigenschaft in Abhängigkeit von der Temperatur und / oder der Bewegung einstellbar ist.

12. Beleuchtungsvorrichtung nach mindestens einem der vorhergehenden Ansprüche, **dadurch gekennzeichnet, dass** eine Vielzahl von Beleuchtungsmitteln (1) miteinander zur einer flächigen oder räumlichen Anordnung gekoppelt sind und die Beleuchtungsmittel (1) der Anordnung durch die Datenverarbeitungsvorrichtung (5) koordiniert bewegbar sind.

13. Beleuchtungsvorrichtung nach Anspruch 12, **dadurch gekennzeichnet**, das für die Vielzahl der Beleuchtungsmittel (1) eine periodische Bewegung, insbesondere eine Wellenbewegung, eine Verformung der Form der Beleuchtungsvorrichtung (100) und / oder eine Bewegung in Abhängigkeit von Daten einer Sensorvorrichtung (4) ausführbar ist.

14. Verfahren zur Beleuchtung eines Objektes mittels einer Beleuchtungsvorrichtung mit mindestens einem Beleuchtungsmittel, wobei sich die räumliche Lage des mindestens einen Beleuchtungsmittels (1) relativ zum Objekt (10) zeitlich verändert und mindestens ein Beleuchtungsparameter (L1, L2) für die Beleuchtung des Objekts (10) in Abhängigkeit von der Lageänderung des Beleuchtungsmittels (1) eingestellt wird,
**dadurch gekennzeichnet, dass**
die Beleuchtung des Objektes (10) von einer Datenverarbeitungsvorrichtung (5) so gesteuert wird, dass mindestens eine Beleuchtungseigenschaft des mindestens einen Beleuchtungsmittels (1) einem vorgegebenen Programm folgt, nämlich im Wesentlichen konstant bleibt, auch wenn sich die räumliche Lage des mindestens einen Beleuchtungsmittels (1) ändert, wobei während der Bewegung des Beleuchtungsmittels (1) die Leuchtstärke jeweils angepasst wird, entweder kontinuierlich oder in diskreten Schritten, so dass bei einer Bewegung auf das Objekt (10) der Lichtstrom verringert wird, bei einer Bewegung vom Objekt (10) weg die Lichtstärke erhöht wird, sodass im beleuchteten Bereich eine im wesentlichen gleichmäßige Beleuchtung herrscht, und sodass die Beleuchtungseigenschaft durch die bewegliche Funktion der Beleuchtungsvorrichtung nicht beeinträchtigt wird.

## Claims

1. Illumination apparatus for illuminating an object, comprising at least one illumination means (1) the spatial location of which relative to the object (10) is temporally variable and at least one illumination parameter (L1, L2) for the illumination of the object (10) is settable in dependence on the location change of the illumination means (1), **characterized in that** the illumination of the object (10) is controlled by a data processing apparatus (5) such that at least one illumination property of the at least one illumination means (1) follows a specified program, specifically remains substantially constant, even if the spatial location of the at least one illumination means (1) changes, wherein, during the movement of the illumination means (1), the luminosity is adapted in each case, either continuously or in discrete steps, such that, in the case of a movement toward the object (10) the luminous flux decreases, during a movement away from the object (10) the light intensity increases, with the result that a substantially uniform illumination prevails in the illuminated region, and with the result that the illumination property is not impaired by the movable function of the illumination apparatus.

2. Illumination apparatus according to Claim 1, **characterized in that** the spatial location of the at least one illumination means (1) relative to the object (10) is determined by a temporally variable distance (x(t)), a temporally variable orientation (y(t)) of which relative to the object (10) and/or the movement path thereof relative to the object (10).

3. Illumination apparatus according to Claim 1 or 2, **characterized in that** the location change of the at least one illumination means (1) is determined by a changed location, in particular the difference between two sites, by the velocity of the location change and/or the acceleration of the location change.

4. Illumination apparatus according to at least one of the preceding claims, **characterized in that** the at least one illumination parameter (L1, L2) is the luminous flux, the light intensity, the illuminance, light density, the illumination direction, the focusing, the polarization, the colour rendering index and/or the colour value of the light emanating from the illumination means (1).

5. Illumination apparatus according to at least one of the preceding claims, **characterized in that** at least two illumination means (1A, 1B, 1C, 1D, 1E) are movably coupled to one another and are at least partially movable relative to the object (10) by a drive (20).

6. Illumination apparatus according to Claim 5, **characterized in that** the drive (20) is controllable by the data processing apparatus (5) for moving the at least two illumination means (1A, 1B, 1C, 1D, 1E).

7. Illumination apparatus according to at least one of the preceding claims, **characterized in that** a multiplicity of illumination means (1A, 1B, 1C, 1D, 1E), in particular illumination means (1) of the same type, are arranged in a regular pattern and the change in the spatial location of the illumination means (1A, 1B, 1C, 1D, 1E) is mutually adaptable.

8. Illumination apparatus according to at least one of the preceding claims, **characterized in that** a specific number of illumination means (1A, 1B, 1C, 1D, 1E) are combined in one module (6), which are movable in a specifiable manner with other same-type modules (6) of illumination means (1A, 1B, 1C, 1D, 1E), wherein a module (6) has at least two illumination means (1) in a linear arrangement, wherein the illumination means (1) are movable in particular substantially perpendicular to the linear arrangement.

9. Illumination apparatus according to at least one of the preceding claims, **characterized by** a multiplicity of modules (6) which have a multiplicity of illumination means (1), wherein the modules (6) are embodied to be curve-shaped and the modules (6) are arranged concentrically with respect to one another.

10. Illumination apparatus according to at least one of the preceding claims, **characterized in that** an object (10) is coupled to at least one sensor apparatus (4), in particular for the at least one illumination property, and with the measurement value of which at least one illumination parameter (L1, L2) and/or the spatial location of the illumination means (1) is settable.

11. Illumination apparatus according to Claim 10, **characterized in that** the at least one sensor apparatus (4) has a temperature sensor and/or a motion sensor, wherein the at least one illumination property is settable in dependence on the temperature and/or the movement.

12. Illumination apparatus according to at least one of the preceding claims, **characterized in that** a multiplicity of illumination means (1) are coupled to one another to form a two-dimensional or three-dimensional arrangement, and the illumination means (1) of the arrangement are movable in a coordinated fashion by the data processing apparatus (5).

13. Illumination apparatus according to Claim 12, **characterized in that** a periodic movement, in particular a wave movement, a deformation of the shape of the illumination apparatus (100) and/or a movement in dependence on data of a sensor apparatus (4) is performable for the multiplicity of the illumination means (1).

14. Method for illuminating an object using an illumination apparatus having at least one illumination means, wherein the spatial location of the at least one illumination means (1) relative to the object (10) temporally changes and at least one illumination parameter (L1, L2) for the illumination of the object (10) is set in dependence on the location change of the illumination means (1), **characterized in that** the illumination of the object (10) is controlled by a data processing apparatus (5) such that at least one illumination property of the at least one illumination means (1) follows a specified program, specifically remains substantially constant, even if the spatial location of the at least one illumination means (1) changes, wherein, during the movement of the illumination means (1), the luminosity is adapted in each case, either continuously or in discrete steps, such that, in the case of a movement toward the object (10) the luminous flux decreases, during a movement away from the object (10) the light intensity increases, with the result that a substantially uniform illumination prevails in the illuminated region, and with the result that the illumination property is not impaired by the movable function of the illumination apparatus.

## Revendications

1. Dispositif d'éclairage servant à éclairer un objet, comprenant au moins un moyen d'éclairage (1), dont la position spatiale par rapport à l'objet (10) peut varier dans le temps et dont au moins un paramètre d'éclairage (L1, L2) pour l'éclairage de l'objet (10) peut être réglé en fonction du changement de position du moyen d'éclairage (1),
**caractérisé en ce que**
l'éclairage de l'objet (10) est commandé par un dispositif de traitement de données (5) de telle sorte qu'au moins une propriété d'éclairage de l'au moins un moyen d'éclairage (1) suit un programme spécifié, à savoir reste sensiblement constante même si la position spatiale de l'au moins un moyen d'éclairage (1) est modifiée, dans lequel pendant le déplacement du moyen d'éclairage (1), l'intensité lumineuse est respectivement adaptée, soit en continu ou par paliers discrets si bien que lors d'un déplacement sur l'objet (10), le flux de lumière est réduit, lors d'un déplacement s'éloignant de l'objet (10), l'intensité de lumière est augmentée si bien qu'un éclairage sensiblement homogène règne dans la zone éclairée, et si bien que la propriété d'éclairage n'est pas entravée par le fonctionnement mobile du dispositif d'éclairage.

2. Dispositif d'éclairage selon la revendication 1, **caractérisé en ce que** la position spatiale de l'au moins un moyen d'éclairage (1) par rapport à l'objet (10) est définie par un espacement (x(t)) variable dans le temps, dont l'orientation (y(t)) variable dans le temps par rapport à l'objet (10) et/ou la trajectoire de déplacement par rapport à l'objet (10) sont définis.

3. Dispositif d'éclairage selon la revendication 1 ou 2,
**caractérisé en ce que** la modification de position de l'au moins un moyen d'éclairage (1) est définie par une position modifiée, en particulier la différence entre deux emplacements, par la vitesse de la modification de position et/ou l'accélération de la modification de position.

4. Dispositif d'éclairage selon au moins l'une quelconque des revendications précédentes, **caractérisé en ce que** l'au moins un paramètre d'éclairage (L1, L2) est le flux de lumière, l'intensité de lumière, l'intensité d'éclairage, la densité lumineuse, la direction d'éclairage, la concentration, la polarisation, l'indice de reproduction de couleurs et/ou la valeur de couleur de la lumière partant du moyen d'éclairage (1).

5. Dispositif d'éclairage selon au moins l'une quelconque des revendications précédentes, **caractérisé en ce qu'**au moins deux moyens d'éclairage (1A, 1B, 1C, 1D, 1E) sont couplés les uns aux autres de manière mobile et peuvent être déplacés au moins en partie par rapport à l'objet (10) par l'intermédiaire d'un entraînement (20).

6. Dispositif d'éclairage selon la revendication 5, **caractérisé en ce que** l'entraînement (20) peut être commandé aux fins du déplacement des au moins deux moyens d'éclairage (1A, 1B, 1C, 1D, 1E) par le dispositif de traitement de données (5).

7. Dispositif d'éclairage selon au moins l'une quelconque des revendications précédentes, **caractérisé en ce qu'**une pluralité de moyens d'éclairage (1A, 1B, 1C, 1D, 1E), en particulier des moyens d'éclairage (1) similaires, sont disposés selon un modèle régulier, et la modification de la position spatiale des moyens d'éclairage (1A, 1B, 1C, 1D, 1E) peut être adaptée les unes aux autres.

8. Dispositif d'éclairage selon au moins l'une quelconque des revendications précédentes, **caractérisé en ce qu'**un nombre défini de moyens d'éclairage (1A, 1B, 1C, 1D, 1E) sont regroupés en un module (6), lesquels peuvent être déplacés d'une manière prédéfinie avec d'autres modules (6) similaires composés de moyens d'éclairage (1A, 1B, 1C, 1D, 1E), dans lequel un module (6) présente au moins deux moyens d'éclairage (1) selon un agencement linéaire, dans lequel les moyens d'éclairage (1) peuvent être déplacés en particulier sensiblement de manière perpendiculaire par rapport à l'agencement linéaire.

9. Dispositif d'éclairage selon au moins l'une quelconque des revendications précédentes, **caractérisé par** une pluralité de modules (6), qui présentent une pluralité de moyens d'éclairage (1), dans lequel les modules (6) sont réalisés de manière à présenter une forme de courbe et les modules (6) sont disposés les uns par rapport aux autres de manière concentrique.

10. Dispositif d'éclairage selon au moins l'une quelconque des revendications précédentes, **caractérisé en ce qu'**un objet (10) est couplé à au moins un dispositif de capteur (4), en particulier pour l'au moins une propriété d'éclairage, et sa valeur de mesure permet de régler un paramètre d'éclairage (L1, L2) et/ou la position spatiale du moyen d'éclairage (1).

11. Dispositif d'éclairage selon la revendication 10, **caractérisé en ce que** l'au moins un dispositif de capteur (4) présente un capteur de température et/ou un capteur de déplacement, dans lequel l'au moins une propriété d'éclairage peut être réglée en fonction de la température et/ou du déplacement.

12. Dispositif d'éclairage selon au moins l'une quelconque des revendications précédentes, **caractérisé en ce qu'**une pluralité de moyens d'éclairage (1) sont couplés les uns aux autres pour former un agencement à plat ou spatial, et les moyens d'éclairage (1) de l'ensemble peuvent être déplacés de manière coordonnée par le dispositif de traitement de données (5).

13. Dispositif d'éclairage selon la revendication 12, **caractérisé en ce que** pour la pluralité des moyens d'éclairage (1), un déplacement périodique, en particulier un déplacement ondulatoire, une déformation de la forme du dispositif d'éclairage (100) et/ou un déplacement peuvent être exécutés en fonction de données du dispositif de capteur (4).

14. Procédé servant à éclairer un objet au moyen d'un dispositif d'éclairage avec au moins un moyen d'éclairage, dans lequel la position spatiale de l'au moins un moyen d'éclairage (1) par rapport à l'objet (10) varie dans le temps et au moins un paramètre d'éclairage (L1, L2) pour l'éclairage de l'objet (10) est réglé en fonction de la modification de position du moyen d'éclairage (1),
**caractérisé en ce que**
l'éclairage de l'objet (10) est commandé par un dispositif de traitement de données (5) de telle sorte qu'au moins une propriété d'éclairage de l'au moins un moyen d'éclairage (1) suit un programme spécifié, à savoir reste sensiblement constante, même si la position spatiale de l'au moins un moyen d'éclairage (1) est modifiée, dans lequel pendant le déplacement du moyen d'éclairage (1), l'intensité lumineuse est respectivement adaptée, soit en continu soit par paliers discrets, si bien que lors d'un déplacement sur l'objet (10), le flux de lumière est réduit, lors d'un déplacement s'éloignant de l'objet (10), l'intensité de lumière est augmentée si bien qu'un éclairage sensiblement homogène règne dans la zone éclairée et si bien que la propriété d'éclairage n'est pas entravée par le fonctionnement mobile du dispositif d'éclairage.
